# EUROPEAN PATENT APPLICATION

(11) **EP 2 076 039 A2**
(43) Date of publication of application: **01.07.2009**
(21) Application number: 08022048.6
(22) Date of filing: 18.12.2008
(51) Int. Cl.: H04N 7/173, H04N 5/765

(54) **Image processing system capable of recording captured images for unlimited recording time**

(30) Priority: 28.12.2007 JP 2007340384
(71) Applicant: Nec Corporation, Tokyo 108-8001 (JP)
(72) Inventor: Ishikawa, Yasuaki, Tokyo 108-8001 (JP)
(74) Representative: Glawe, Delfs, Moll

(57) **Abstract**

An image processing system of the present invention includes an authentication server and an archive server each connected to a mobile terminal through a network, wherein the authentication server transmits a first permission notification to the archive server and the mobile terminal to indicate that the mobile terminal is permitted to use an image processing service when the authentication server authenticates that the mobile terminal which requests a connection is a previously registered terminal, and the archive server which, upon receipt of the first permission notification from the authentication server and upon receipt of image data from the mobile terminal, preserves the received image data.

## Description

This application is based upon and claims the benefit of priority from Japanese Patent Application No. 2007- 340384 filed on December 28, 2007, the content of which is incorporated by reference.

### 1. Field of the Invention:

The present invention relates to an image processing system, a server device, and an image processing method for processing image data.

### 2. Description of the Related Art:

While video cameras had employed a method of recording captured images on a magnetic tape, they have been recently employing a method of converting image data to a digital signal which is then recorded on a DVD (Digital Versatile Disk) or a memory card. A recording medium such as a DVD, a memory card or the like is loaded into the body of a video camera for recording captured images thereon.

When a capturing time is expected to be long, a recording medium having a larger recording capacity may be loaded. Additionally, a video camera may be connected to a personal computer (hereinafter called the "PC") using a dedicated connector to copy image data recorded on a recording medium in a storage unit of the PC. The PC may be connected to the Internet to transmit image data copied in the storage unit to PCs owned by remotely located persons. JP-2004-208250-A discloses an exemplary method which permits an image data recipient to select images to be received with reference to information related to the image data before the reception of the image data.

Home-use video cameras are reduced in size in order to improve portability, accompanied by a reduction in the size of the recording medium which is limited in recording time. When a person attempts to record scenes during a trip for one week or longer or at places visited for business, he/she must sometimes carry a plurality of recording media to the destination of the trip, even if he/she selects media having the largest recording capacity, because the capturing time is expected to be long. Also, because improved image quality is the result of the imaging device in a video camera using an increased number of pixels, the amount of data to be stored in further increased. As a matter of inconvenience to the user, the user has to consider recording time and image quality when capturing images and this means worrying about the remaining recording capacity of a recording medium.

Also, even if an attempt is made to transmit captured images to PCs of remotely located persons through the Internet as early as possible, image data must be once recorded in a PC, which takes an excessive amount of time to transmit, with a resulting problem of lack for real time processing.

### SUMMARY OF THE INVENTION

An exemplary object of the invention is to provide an image processing system, a server device, and an image processing method which eliminates the need for considering a limit for a captured image recording time.

An image processing system according to an exemplary aspect of the invention includes an authentication server and an archive server each connected to a mobile terminal through a network, wherein: the authentication server transmits a first permission notification to the archive server and the mobile terminal to indicate that the mobile terminal is permitted to use an image processing service when the authentication server authenticates that the mobile terminal which requests a connection is a previously registered terminal; and the archive server which, upon receipt of the first permission notification from the authentication server and upon receipt of image data from the mobile terminal, preserves received image data.

The above and other objects, features and advantages of the present invention will become apparent from the following description with reference to the accompanying drawings which illustrate examples of the present invention.

### BRIEF DESCRIPTION OF THE DRAWINGS

Fig. 1 is a block diagram for describing an image processing system of an embodiment;
Fig. 2 is a block diagram showing an exemplary configuration of a video camera;
Fig. 3 is a block diagram showing an exemplary configuration of a mobile terminal;
Fig. 4 is a block diagram showing an exemplary configuration of an authentication server;
Fig. 5 is a block diagram showing an exemplary configuration of an archive server;
Fig. 6 is a block diagram showing an exemplary configuration of a relay server;
Fig. 7 is a block diagram showing an exemplary configuration of an information processing terminal;
Fig. 8 is a flow chart showing a procedure of an authentication operation for a mobile terminal by the authentication server;
Fig. 9 is a flow chart showing a procedure of an authentication operation for an information processing terminal by the authentication server;
Fig. 10 is a flow chart showing an operation procedure for data preservation processing;
Fig. 11 is a flow chart showing an operation procedure for downloading image data from the archive server;
Fig. 12 is a flow chart showing an operation procedure for preserving data and relaying data in real time;
Fig. 13 is a flow chart showing an operation procedure for relaying data in real time;
Fig. 14 is a flow chart showing an operation procedure for processing to end the connection of a mobile terminal;
Fig. 15 is a flow chart showing an operation procedure for processing to end the connection of an information processing terminal; and
Fig. 16 is a block diagram showing another exemplary connection for the image processing system of this embodiment.

### DETAILED DESCRIPTION OF THE EXEMPLARY EMBODIMENTS

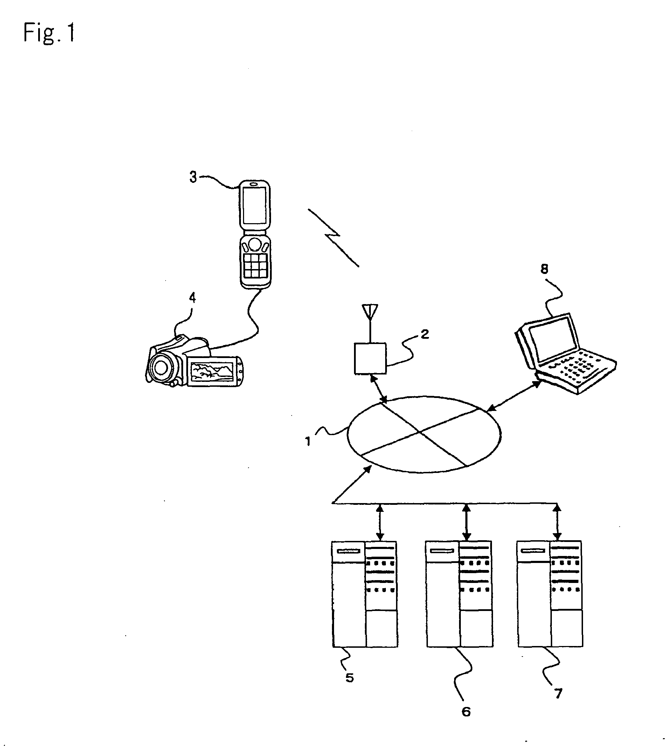

A description will be given of the configuration of an image processing system according to the exemplary embodiment. Fig. 1 is a block diagram for describing the image processing system of this embodiment.

The image processing system of this embodiment comprises authentication server 5, archive server 6, and relay server 7. These servers are connected to a network such as the Internet through signal lines, as shown in Fig. 1. In this embodiment, the network is an Internet protocol communication network (hereinafter referred to as "IP network") 1.

Also, IP network 1 is connected to mobile terminal 3 and radio base station device (hereafter referred to as "BTS") 2 for communicating with mobile terminal 3 over the air. Video camera 4 for use in image capturing is connected to mobile terminal 3 through a signal cable, and information processing terminal 8 is connected to IP network 1.

The user of information processing terminal 8 may be the same as or different from the user of mobile terminal 3. The user of mobile terminal 3 may download image data preserved in archive server 6 to information processing terminal 8 for editing, in which case the two terminals are associated with the same user. The user of mobile terminal 3 may transmit image captured by video camera 4 to information processing terminal 8 operated by another person, in which case the respective terminals are associated with different users.

It should be noted that image data may be data representative of a single still image or data representative of a moving image comprised of a plurality of still images.

Each of mobile terminal 3, information processing terminal 8, authentication server 5, archive server 6, and relay server 7 is assigned a different identifier which is registered in a memory within a respective control unit. Each signal and each information item transmitted and received between devices is provided with a header indicative of the source and destination, as represented by a packet in the Internet communication. An identifier of an associated device is described in the header.

Since the communication method between these devices and the configuration of IP network 1 is similar technique to those known in Internet protocol communications, detailed descriptions thereon are omitted. Likewise, since the configuration of BTS 2 is similar to that known in radio communication systems for mobile telephones, a detailed description thereon is omitted. In the following, the remaining components will be described.

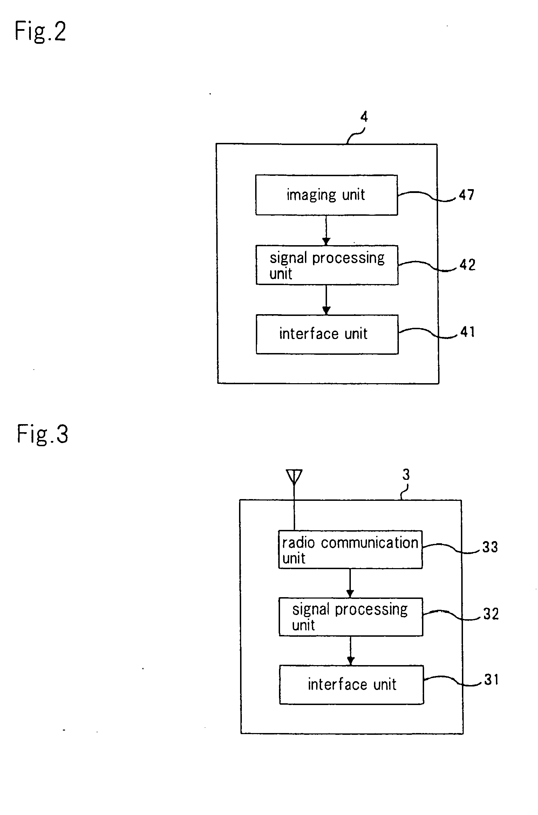

Fig. 2 is a block diagram showing an exemplary configuration of the video camera.

As shown in Fig. 2, video camera 4 comprises imaging unit 47 for capturing an image, interface unit 41 for communicating with mobile terminal 3, and signal processing unit 42 for transmitting image data to mobile terminal 3 through interface unit 41.

Imaging unit 47 comprises a lens (not shown), and an imaging device (not shown) for converting an image input thereto through the lens to digital image data. Signal processing unit 42 converts image data received from imaging unit 47 to a serial transmission form, and transmits the converted image data to mobile terminal 3 through interface unit 41 and a signal cable.

Next, mobile terminal 3 will be described. Fig. 3 is a block diagram showing an exemplary configuration of the mobile terminal.

As shown in Fig. 3, mobile terminal 3 comprises radio communication unit 33 for communicating with BTS 2, interface unit 31 for communicating with an external device, and signal processing unit 32 for converting image data received from video camera 4 to a radio communication scheme. Signal processing unit 32 comprises a CPU (Central Processing Unit) (Not shown) for executing processing in accordance with a program, and a program memory (not shown) which stores the program.

Signal processing unit 32 requests authentication server 5 for a connection in response to a user input through interface unit 31. Upon receipt of information which indicates that authentication server 5 has successfully authenticated that mobile terminal 3 is a registered terminal, signal processing unit 32 transmits a mode notification to authentication server 5 for notifying setting information such as a communication method, an accounting method and the like. Subsequently, image data received from video camera 4 is transmitted to archive server 6 through interface unit 31.

The setting information includes image information, a data rate, and information on whether or not preserved images can be opened to the public, whether or not the preserved images can be relayed in real time, whether or not the source is charged, and whether or not the destination is charged. All of the foregoing information may not be included in the setting information, and the user may select information which he deems as needed.

The image information refers to the name of an image which is to be shortly transmitted, and the vertical and horizontal dimensions of the image. The data rate refers to a transmission rate of the image which is to be shortly transmitted, i.e., a value represented in bps (bit per second). The real time relay refers to the transmission of image data transmitted from mobile terminal 3 to information processing terminal 8 as it is, without preserving the data in a storage device (hard disk or the like) of archive server 6.

The transmission of image data may employ a high-speed communication such as HSUPA (High Speed Uplink Packet Access), LTE (Long Term Evolution), WiMAX (Worldwide Interoperability for Microwave Access), or the like which are used in technologies such as the third generation mobile telephones, wireless LAN, and the like. By employing any of these technologies, a large capacity of high-quality image data can be transmitted per unit time.

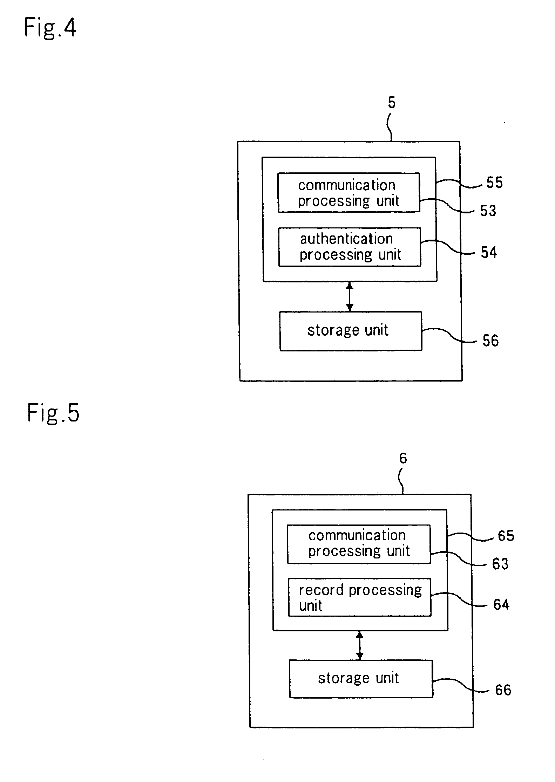

Next, authentication server 5 will be described. Fig. 4 is a block diagram showing an exemplary configuration of the authentication server.

As shown in Fig. 4, authentication server 5 comprises storage unit 56 which stores authentication information for authenticating a terminal which requests an access, and control unit 55. Control unit 55 comprises communication processing unit 53 for connecting to IP network 1, and authentication processing unit 54 for authenticating mobile terminal 3 and information processing terminal 8. Control unit 55 comprises a CPU (not shown) for executing processing in accordance with a program, and a program memory (not shown) which stores the program. The CPU executes the program to virtually implement communication processing unit 53 and authentication processing unit 54 within the authentication server.

The authentication information stored in storage unit 56 has previously recorded the identifier of a terminal of a user who receives an image processing service. In this embodiment, the authentication is performed using the identifier of a terminal, but alternatively, the authentication may be performed using a password which is previously registered by the user.

Authentication processing unit 54 performs matching processing for examining whether or not mobile terminal 3 or information processing terminal 8, which requests a connection, matches with a terminal registered in the authentication information, in order to execute authentication processing for mobile terminal 3 or information processing terminal 8. Authentication processing unit 54 transmits a user permission notification to the terminal to notify that the terminal is permitted to use the image processing service when it recognizes, as a result of the matching, that the terminal which requests a connection is the terminal registered in the authentication information. This notification is referred to as a "permission OK notification." On the other hand, when the terminal is not registered in the authentication information, authentication processing unit 54 transmits a use rejection notification to the terminal to notify that the terminal is not permitted to use the image processing service. This notification is referred to as a "permission NG notification."

Upon receipt of a mode notification from the authenticated terminal, authentication processing unit 54 sets the mode, and forwards the mode notification to archive server 6 and relay server 7.

Also, upon receipt of a channel reference from information processing terminal 8, authentication processing unit 54 creates a channel list, and forwards the channel reference to archive server 6. Upon receipt of a list response which is a response to the channel reference from archive server 6, authentication processing unit 54 generates a list notification which is then transmitted to information processing terminal 8.

A channel refers to one classification when image data preserved in archive server 6, or image data relayed in real time is classified by theme. The channel is given a different name for each channel. The channel reference, herein referred to, is a reference, requested by information processing terminal 8, which is made to examine which images have been registered.

The list response includes image information, and information on whether or not image data is relayed in real time, whether or not image data is preserved, and whether or not a charge had been made to the destination. The list response also includes information on "whether or not image data is relayed in real time" in order to enable the user of information processing terminal 8 to select browsing images relayed in real time or browsing images preserved in archive server 6, when the user browses images.

Upon receipt of a channel request signal having a communication condition including a channel name and a transmission bit rate from information processing terminal 8, authentication processing unit 54 performs channel setting processing, and transmits channel setting information, which is information related to the setting, to archive server 6 and relay server 7. The channel request signal and channel setting information includes information on the identifier of information processing terminal 8 which has transmitted the channel request signal to authentication server 5. Upon receipt of a setting response for notifying that the setting has been made in accordance with the channel setting information from archive server 6 and relay server 7, authentication processing unit 54 transmits a setting content notification including information on setting contents to information processing terminal 8.

Authentication processing unit 54 also executes accounting processing for a service used by the authenticated terminal. An accounting method involves adding a charge corresponding to the amount of preserved or transmitted data. The calculated charge is preserved in storage unit 56 together with the information on the identifier of the terminal.

Next, archive server 6 will be described. Fig. 5 is a block diagram showing an exemplary configuration of the archive server.

As shown in Fig. 5, archive server 6 comprises storage unit 66 for preserving received image data, and control unit 65. Control unit 65 comprises communication processing unit 63 for connecting to IP network 1, and record processing unit 64 for recording image data received from mobile terminal 3 in storage unit 66. Control unit 65 comprises a CPU (not shown) for executing processing in accordance with a program, and a program memory (not shown) which stores the program. The CPU executes the program to virtually implement communication processing unit 63 and record processing unit 64 in the archive server.

Upon receipt of a content notification from authentication server 5 for querying the contents of a mode notification, record processing unit 64 transmits a setting permission signal to authentication server 5, for indicating a result as to whether or not settings can be made in accordance with the contents of the mode notification. Record processing unit 64 transmits a setting OK signal when the settings can be made, and transmits a setting NG signal when the settings cannot be made. Also, upon receipt of a channel reference signal from information processing terminal 8 through authentication server 5, record processing unit 64 creates a list response which is then transmitted to authentication server 5.

Upon receipt of channel setting information from authentication server 5, record processing unit 64 stores a communication condition included in the channel setting information together with information on the identifier of the terminal in storage unit 66, and transmits a setting response to authentication server 5. Also, recording processing unit 64 stores image data received from mobile terminal 3 in storage unit 66. Then, recording processing unit 64 reports the amount of preserved data to authentication server 5. Also, upon receipt of a data transfer request from relay server 7, record processing unit 64 reads image data preserved in storage unit 66 and transfers the image data to relay server 7.

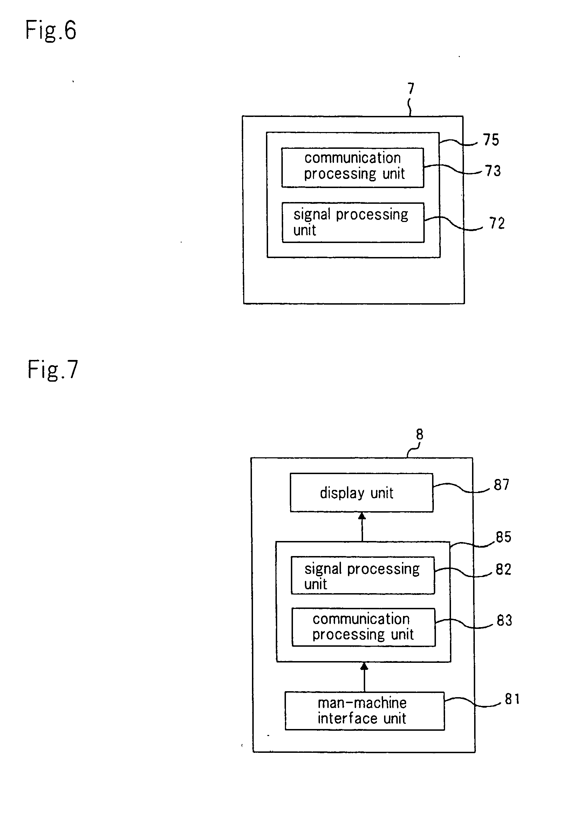

Next, relay server 7 will be described. Fig. 6 is a block diagram showing an exemplary configuration of the relay server.

As shown in Fig. 6, relay server 7 comprises communication processing unit 73 for connecting to IP network 1, and control unit 75 which includes signal processing unit 72 for converting a bit rate. Control unit 75 comprises a CPU (not shown) for executing processing in accordance with a program, and a memory (not shown) which stores the program. The CPU executes the program to virtually implement communication processing unit 73 and signal processing unit 72 within the relay server.

Upon receipt of a content notification from authentication server 5 for querying the contents of a mode notification, signal processing unit 72 transmits a setting permission signal to authentication server 5 in a manner similar to archive server 6. Upon receipt of channel setting information from authentication server 5, signal processing unit 72 stores a communication condition included in the channel setting information together with information on the identifier of the terminal in a memory (not shown) of control unit 75t, and transmits a setting response to authentication server 5.

When "Opening of Preserved Image to the Public" is set to "OK" in the setting information, signal processing unit 72 notifies archive server 6 of a data transfer request on a periodic basis. Signal processing unit 72 converts the rate of image data received from archive server 6 in accordance with the bit rate requested by information processing terminal 8, and transmits the image data to information processing terminal 8 at the converted rate. When "Real Time Relay" is set to "OK" in the setting information, signal processing unit 72 converts the rate of image data received from archive server 6 to a bit rate requested by information processing terminal 8, and transmits the image data to information processing terminal 8. Then, signal processing unit 72 reports the amount of data transmitted to information processing terminal 8 to authentication server 5.

The "rate conversion", herein referred to, means that the bit rate of image data preserved in archive server 6 is converted to a bit rate specified by information processing terminal 8 when the data is transmitted. The bit rate of information processing terminal 8 differs depending on radio and Internet communication situations, and a sufficient band cannot be sometimes ensured to satisfy the bit rate of images preserved in archive server 6. The rate conversion is performed to prevent leakage and lack of transmitted data even in such situations.

In this regard, when the bit rate of transmitted data is lower than the bit rate of received data, control unit 75 may be provided with a buffer memory (not shown) for temporarily preserving the received data.

Next, information processing terminal 8 will be described. Fig. 7 is a block diagram showing an exemplary configuration of the information processing terminal.

As shown in Fig. 7, information processing terminal 8 is an information processing device such as a workstation, a PC or the like, and comprises display unit 87 for displaying an image, man-machine interface unit 81 for an operator to enter instructions, and control unit 85. Control unit 85 comprises communication processing unit 83 for connecting to IP network 1, and signal processing unit 82. Control unit 85 comprises a CPU (not shown) for executing processing in accordance with a program, and a program memory (not shown) which stores the program. The CPU executes the program to virtually implement communication processing unit 83 and signal processing unit 82 within the information processing terminal.

The operator manipulates man-machine interface unit 81 to register authentication information for using an image processing service and select an image to be displayed from a plurality of channels.

Signal processing unit 82 requests authentication server 5 for a connection through interface unit 31 in response to an input of the user. Upon receipt of information which indicates that the authentication server 5 has successfully authenticated, signal processing unit 82 transmits a mode notification to authentication server 5 for notifying setting information such as a communication method, an accounting method and the like. Signal processing unit 82 transmits a channel request signal to authentication server 5, including a communication condition entered by the user through man-machine interface unit 81. Also, upon receipt of image data from relay server 7, signal processing unit 82 causes display unit 87 to display the image thereon. Remaining operations will be described later in greater detail.

Next, a description will be given of operations of the image processing system according to this embodiment.

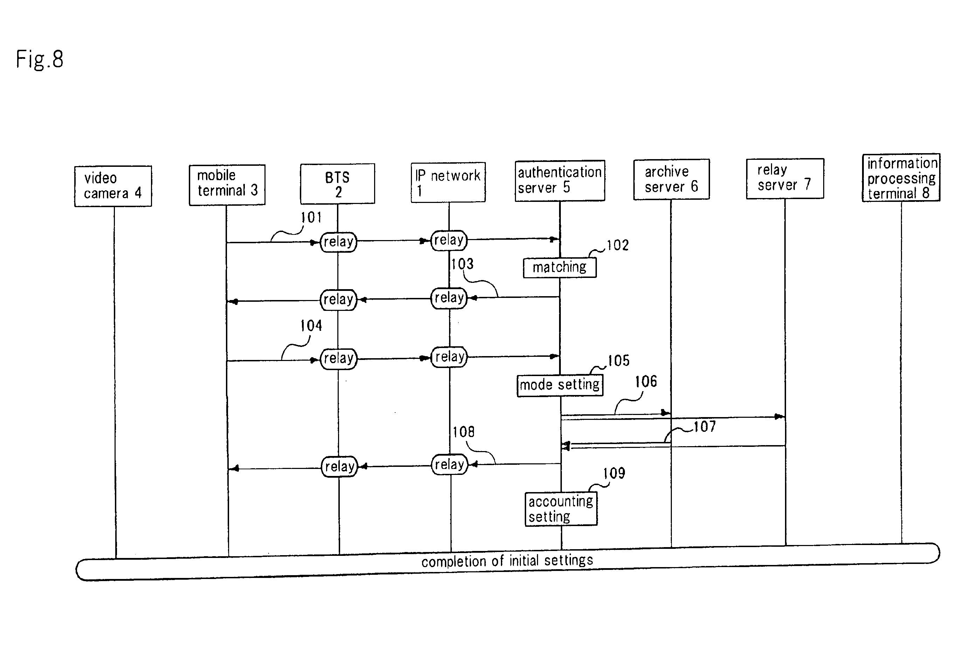

First described is an operation procedure through which authentication server 5 authenticates mobile terminal 3. Fig. 8 is a flow chart showing the procedure of an authentication operation by the authentication server for the mobile terminal.

Mobile terminal 3 transmits a use request signal to authentication server 5 through BTS 2 and IP network 1 for requesting a connection to use a service (step 101). Upon receipt of the use request signal from mobile terminal 3, authentication server 5 performs matching processing with reference to previously registered authentication information to examine whether or not the identifier of mobile terminal 3 has been registered (step 102).

Authentication server 5 transmits a use OK signal to mobile terminal 3 through BTS 2 and IP network 1 (step 103) when it determines, as a result of the matching, that mobile terminal 3 has been registered. On the other hand, when mobile terminal 3 has not been registered, authentication server 5 transmits a use NG signal to mobile terminal 3 through BTS 2 and IP network 1.

Upon receipt of the use OK signal from authentication server 5, mobile terminal 3 transmits a mode notification for notifying setting information to authentication server 5 through BTS 2 and IP network 1 (step 104).

Upon receipt of the mode notification from mobile terminal 3, authentication server 5 performs mode setting processing to confirm whether or not the mode notification describes items required to use the image processing service (step 105). When there is no problem in the mode notification, authentication server 5 transfers a content notification to archive server 6 and relay server 7 for querying the contents of the mode notification (step 106).

Upon receipt of the content notification from authentication server 5, each of archive server 6 and relay server 7 determines whether or not settings can be made in accordance with the contents of the mode notification (OK/NG). The determination as to whether or not settings can be made refers to determining as to whether or not the value of a notified data rate satisfies the physical capabilities of hardware, whether or not the free capacity of the storage unit has sufficient capacity to handle the notified storage capacity, and the like. Each of archive server 6 and relay server 7 transmits a setting OK signal or a setting NG signal to authentication server 5 for indicating the result as to whether or not settings can be made with respect to the content notification (step 107).

Upon receipt of the setting permission signal from archive server 6 and relay server 7, authentication server 5 notifies mobile terminal 3 of setting contents which indicates information as to whether or not the settings can be made through IP network 1 and BTS 2 (step 108). The information as to whether or not the settings can be made is notified to mobile terminal 3 when either the setting OK signal or setting NG signal is transmitted. When this notification is the setting OK signal, this is comparable to a permission notification for use of the service by mobile terminal 3. This notification of setting contents includes information on the address of archive server 6. This information on the address serves as the identifier of archive server 6. Subsequently, authentication server 5 makes a setting for charging authenticated mobile terminal 3 for a service used thereby (step 109).

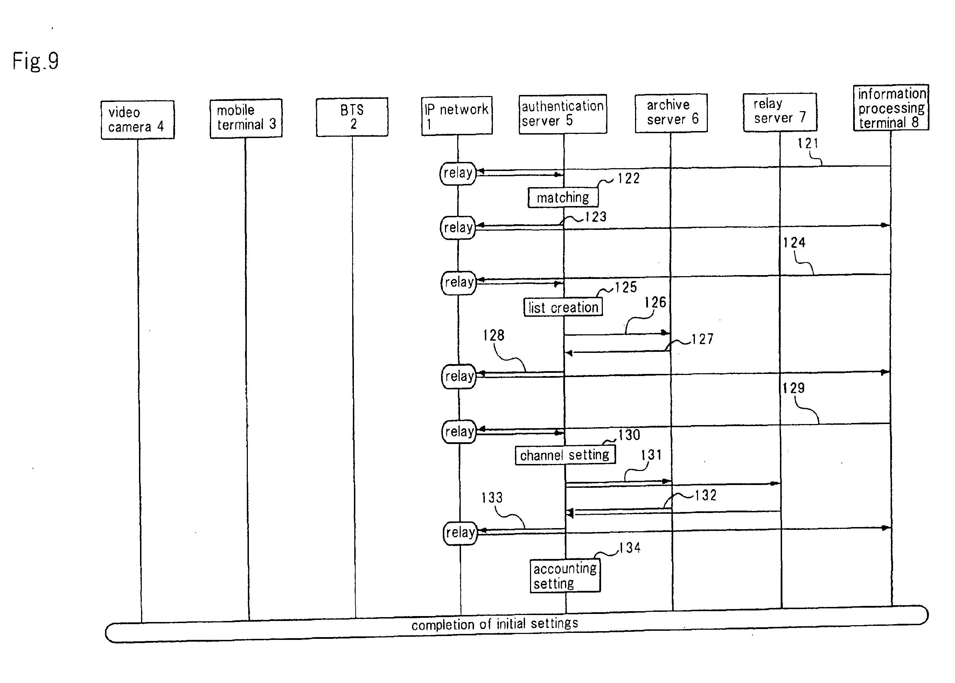

Next, a description will be given of an operation procedure through which authentication server 5 authenticates information processing terminal 8. Fig. 9 is a flow chart showing the procedure of an authentication operation by the authentication server for the information processing terminal.

Information processing terminal 8 transmits a use request signal to authentication server 5 through IP network 1 (step 121). Upon receipt of the use request signal from information processing terminal 8, authentication server 5 performs matching processing with reference to the authentication information to examine whether or not the identifier of information processing terminal 8 has been registered (step 122).

Authentication server 5 transmits a use OK signal to information processing terminal 8 through IP network 1 for indicating that the use is permitted, when it determines, as a result of matching, that information processing terminal 8 has been registered (step 123). On the other hand, when information processing terminal 8 has not been registered, authentication server 5 transmits a use NG signal to information processing terminal 8 through IP network 1.

Upon receipt of the use OK signal from authentication server 5, information processing terminal 8 transmits a channel reference request signal, which is a signal to request a reference to channels, to authentication server 5 through IP network 1 in order to acquire a list of channels available for viewing (step 124).

Upon receipt of the channel reference request signal from information processing terminal 8, authentication server 5 creates a list of channels available for viewing (step 125). Authentication server 5 also forwards the channel reference signal to archive server 6 (step 126). Upon receipt of the channel reference signal from authentication server 5, archive server 6 creates a list response which is transmitted to authentication server 5 (step 127).

Upon receipt of the list response from archive server 6, authentication server 5 generates a list notification based on the contents of the list response, and transmits the list notification to information processing terminal 8 through IP network 1 (step 128). Upon receipt of the list notification from authentication server 5, when the user manipulates man-machine interface 81 to select a channel that is desirable to view, information processing terminal 8 transmits a channel request signal to authentication server 5 through IP network 1 to request the selected channel (step 129). This channel request signal includes the name of the selected channel and information on the reception bit rate.

Upon receipt of the channel request signal from information processing terminal 8, authentication server 5 performs channel setting processing to register the communication condition including the channel name and transmission bit rate based on information included in the channel request signal (step 130). Authentication server 5 also transmits channel setting information, which is information on the channel setting processing, to archive server 6 and relay server 7 (step 131).

Upon receipt of the channel setting information from authentication server 5, archive server 6 stores the communication condition included in the channel setting information together with information on the identifier of the terminal in storage unit 66. Upon receipt of the channel setting information from authentication server 5, relay server 7 stores the communication condition included in the channel setting information together with the information on the identifier of the terminal in a memory (not shown) of control unit 75. Then, the respective servers transmit a setting response to authentication server 5 (step 132).

Upon receipt of the setting response from archive server 6 and relay server 7, authentication server 5 recognizes that a channel setting has been completed, and transmits a setting content notification to information processing terminal 8 through IP network 1 (step 133). This notification is comparable to a permission notification for a service used by information processing terminal 8. The setting content notification includes information on the communication condition including the address of relay server 7, the channel name, and the transmission bit rate. Authentication server 5 charges corresponding to the communication condition which has been set for information processing terminal 8 (step 134).

Next, a description will be given of an operation procedure related to preservation of data of images captured by video camera 4. The preservation of image data refers to processing for preserving images captured by video camera 4 when the real time relay is set to "NO" in the mode notification at step 104 shown in Fig. 8. Assume herein that mobile terminal 3 has been successfully authenticated, as described in connection with Fig. 8.

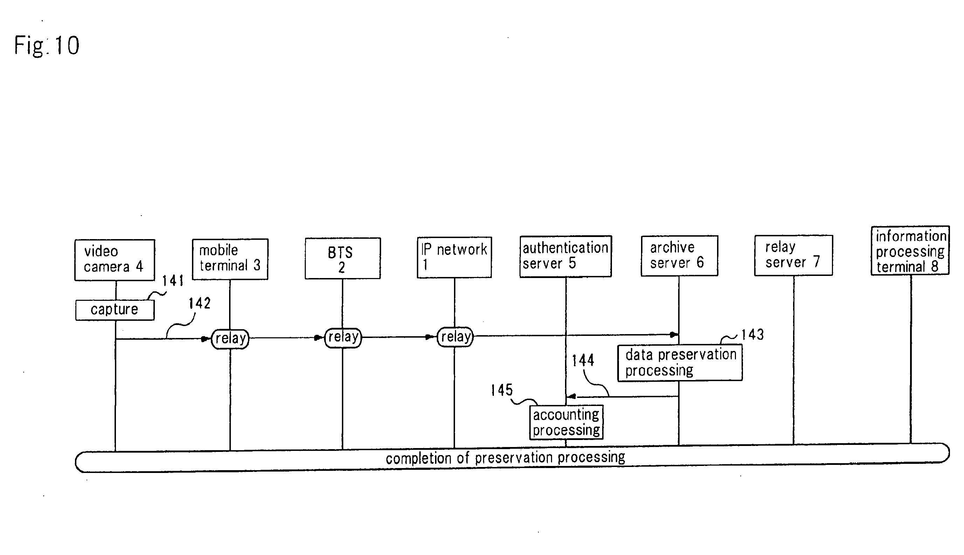

Fig. 10 is a flow chart showing the operation procedure for the data preservation processing.

As the user manipulates video camera 4 for capturing images (step 141), video camera 4 transmits image data to mobile terminal 3, and mobile terminal 3 transmits the image data received from video camera 4 to archive server 6 through BTS 2 and IP network 1 (step 142).

Archive server 6 performs data preservation processing to store the image data received from mobile terminal 3 in storage unit 66 (step 143). Then, archive server 6 transmits data amount report information to authentication server 5 for reporting the amount of preserved data to authentication server 5 (step 144). Upon receipt of the data amount report information from archive server 6, authentication server 5 performs processing for charging mobile terminal 3 in accordance with the data amount (step 145).

Next, a description will be given of an operation procedure when image data preserved in archive server 6 is downloaded to information processing terminal 8. Assume herein that information processing terminal 8 has been successfully authenticated, as described in connection with Fig. 9. Assume also that "Opening of Preserved Image to the Public" is set to "OK" in the channel setting information.

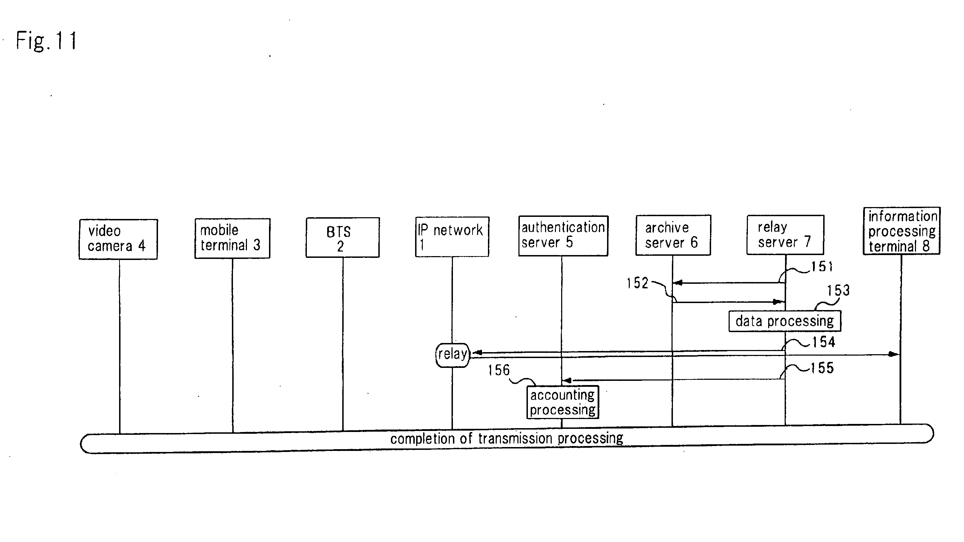

Fig. 11 is a flow chart showing an operation procedure for downloading image data from the archive server.

Relay server 7 periodically transmits a data transfer request to archive server 6 (step 151). Upon receipt of the data transfer request from relay server 7, archive server 6 transfers image data to relay server 7 (step 152). Upon receipt of the image data from archive server 6, relay server 7 performs data processing to convert the rate of the image data based on the setting condition of the transmission data rate included in the channel request signal at step 129 described in connection with Fig. 9 (step 153). Then, relay server 7 transmits the image data, the rate of which has been converted, to information processing terminal 8 through IP network 1 (step 154).

Relay server 7 transmits data amount report information to authentication server 5 for reporting the amount of data transmitted to information processing terminal 8 to authentication server 5 (step 155). Upon receipt of the data amount report information from relay server 7, authentication server 5 performs processing for charging information processing terminal 8 in accordance with the data amount (step 156).

According to this method, since image data is preserved in archive server 6, the image data is transmitted to information processing terminal 8 in response to a data transfer request from relay server 7 to archive server 6. Here, relay server 7 periodically requests data transfer, but archive server 6 may transmit image data to relay server 7 upon receipt of the data transfer request from information processing terminal 8.

Next, description will be given of an operation procedure for performing both the preservation of image data and the real time relay.

The preservation of image data and real time relay refer to processing for preserving images captured by video camera 4 in archive server 6 and relaying the images to information processing terminal 8 in real time when the real time relay is set to "OK" and when the image preservation is set to "OK" in the mode notification at step 104 described in connection with Fig. 9. Assume herein that mobile terminal 3 and information processing terminal 8 have been successfully authenticated.

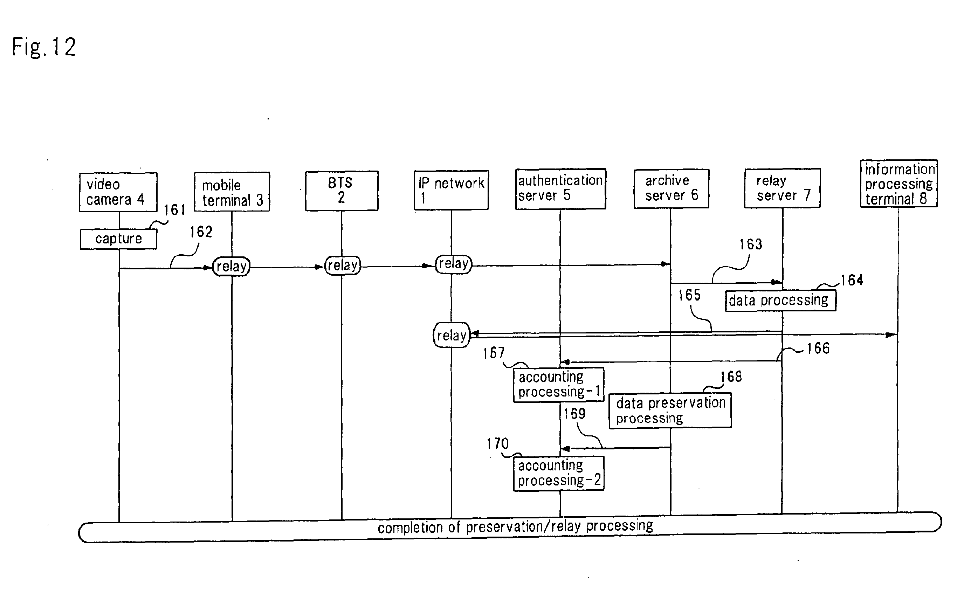

Fig. 12 is a flow chart showing an operation procedure for performing both the preservation of image data and real time relay.

As the user manipulates video camera 4 to capture images (step 161), video camera 4 transmits image data to mobile terminal 3, and mobile terminal 3 transmits the image data received from video camera 4 to archive server 6 through BTS 2 and IP network 1 (step 162).

Upon receipt of the image data from mobile terminal 3, archive server 6 forwards the image data to relay server 7 (step 163). Upon receipt of the image data from archive server 6, relay server 7 performs data processing to convert the rate of the image data based on the communication condition of the transmission data rate included in the channel request signal at step 129 described in connection with Fig. 9 (step 164). Then, archive server 6 transmits the image data, the rate of which has been converted, to information processing terminal 8 through IP network 1 (step 165).

Relay server 7 transmits data amount report information to authentication server 5 for reporting the amount of data transmitted to information processing terminal 8 to authentication server 5 (step 166). Upon receipt of the data amount report information from relay server 7, authentication server 5 performs the processing to charge information processing terminal 8 in accordance with the data amount (step 167).

On the other hand, archive server 6 performs data preservation processing to store the image data received from mobile terminal 3 in storage unit 66 (step 168). Then, archive server 6 transmits data amount report information to authentication server 5 for reporting the amount of preserved data to authentication server 5 (step 169). Upon receipt of the data amount report information from archive server 6, authentication server 5 performs processing to charge mobile terminal 3 in accordance with the data amount (step 170).

According to this method, captured images can be preserved, as the images are being captured, and the captured images can be shown to remotely located persons through the Internet. This method improves the nature of real time processing better than in the case in which image data is first copied to a PC, after the images have been captured by a device, in order to then transmit the image data.

Next, a description will be given of an operation procedure when image data is relayed in real time without preserving this image data. Processing for relaying images captured by video camera 4 to information processing terminal 8 in real time without preserving the images is performed by setting the real time relay to "OK" and the image preservation to "NO" in the mode notification at step 104 described in connection with Fig. 9. Assume herein that mobile terminal 3 and information processing terminal 8 have been successfully authenticated.

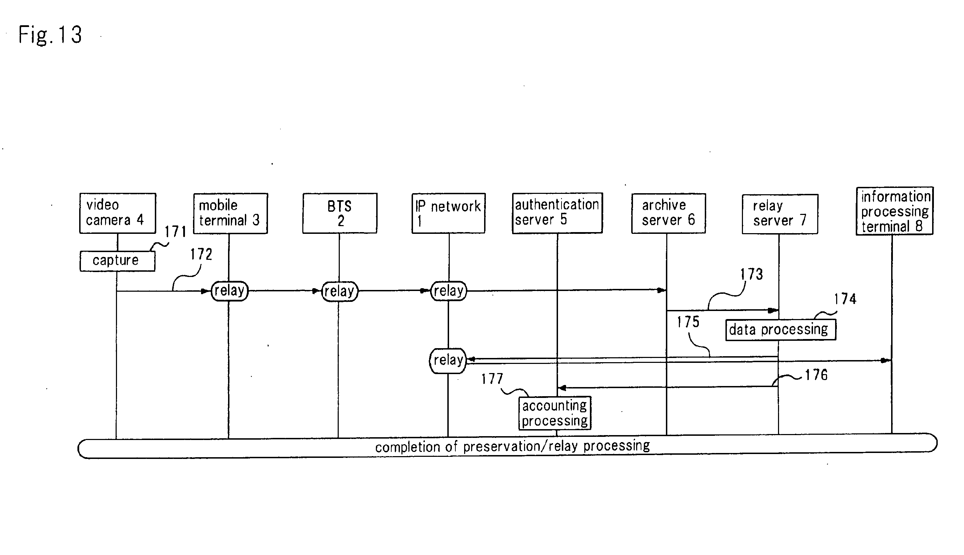

Fig. 13 is a flow chart showing the operation procedure for relaying images in real time.

As the user manipulates video camera 4 to capture images (step 171), video camera 4 transmits image data to mobile terminal 3, and mobile terminal 3 transmits the image data received from video camera 4 to archive server 6 through BTS 2 and IP network 1 (step 172).

Upon receipt of the image data from mobile terminal 3, archive server 6 forwards the image data to relay server 7 (step 173). Upon receipt of the image data from archive server 6, relay server 7 performs data processing to convert the rate of the image data based on the communication condition of the transmission data rate included in the channel request signal at step 129 described in connection with Fig. 9 (step 174). Then, archive server 6 transmits the image data, the rate of which has been converted, to information processing terminal 8 through IP network 1 (step 175).

Relay server 7 transmits data amount report information to authentication server 5 for reporting the amount of data transmitted to information processing terminal 8 to authentication server 5 (step 176). Upon receipt of the data amount report information from relay server 7, authentication server 5 performs processing to charge information processing terminal 8 in accordance with the data amount (step 177).

Next, a description will be given of an operation procedure for shutting off a connection of mobile terminal 3 with the image processing system.

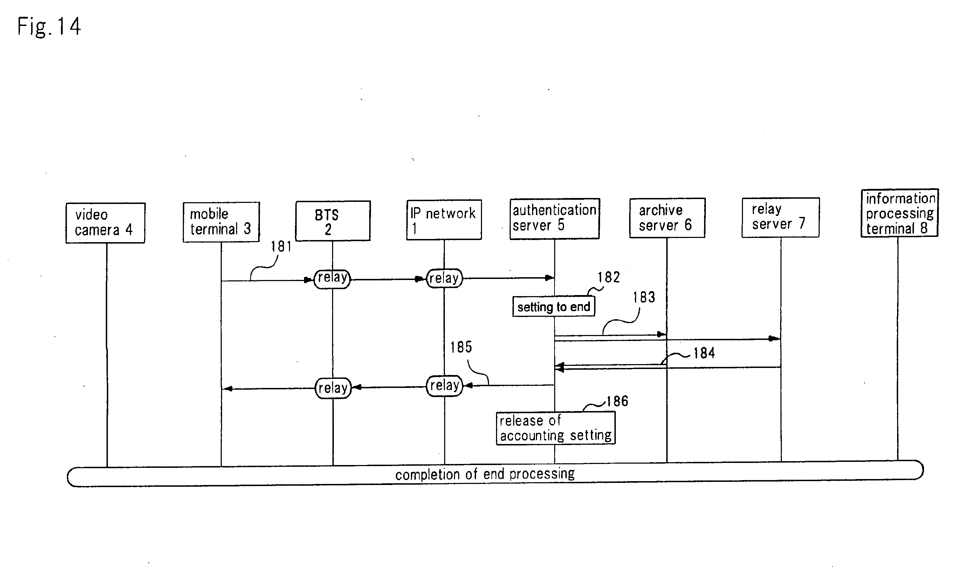

Fig. 14 is a flow chart showing an operation procedure for processing to end the connection of the mobile terminal.

As the user manipulates mobile terminal 3 to enter an instruction to shut off a connection, mobile terminal 3 transmits an end notification signal to authentication server 5 through BTS 2 and IP network 1 for notifying the end of processing (step 181). Upon receipt of the end notification signal from mobile terminal 3, authentication server 5 performs the setting to end processing (step 182). Authentication server 5 also transmits a setting content notification to archive server 6 and relay server 7 for notifying that the setting to end processing has been performed (step 183).

Upon receipt of the setting content notification related to mobile terminal 3 from authentication server 5, each of archive server 6 and relay server 7 performs the setting to end processing for erasing channel setting information related to mobile terminal 3 from the memory. Subsequently, for responding to the setting to end processing, they transmit setting response information to authentication server 5 to indicate that the setting to end processing for mobile terminal 3 has been completed (step 184).

Upon receipt of the setting response information from archive server 6 and relay server 7, authentication server 5 transmits a setting content notification to mobile terminal 3 to indicate that the setting to end processing has been completed (step 185), and performs processing to release an accounting setting for mobile terminal 3 (step 186).

Next, a description will be given of an operation procedure for shutting off a connection of information processing terminal 8 with the image processing system.

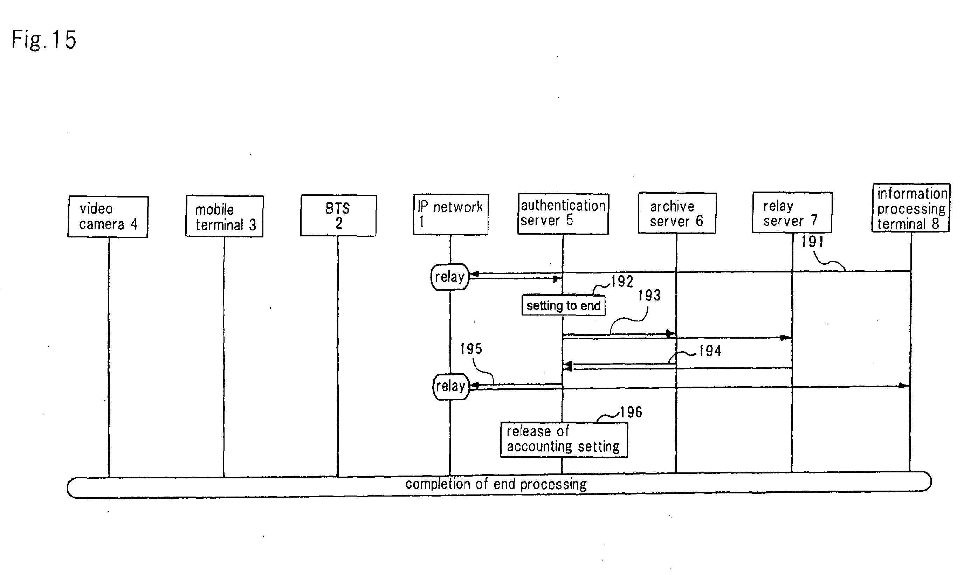

Fig. 15 is a flow chart showing an operation procedure for processing to end the connection of the information processing terminal.

As the user manipulates information processing terminal 8 to enter an instruction to shut off a connection, information processing terminal 8 transmits an end request signal to authentication server 5 through IP network 1 for requesting that the processing be ended (step 191). Upon receipt of the end request signal from information processing terminal 8, authentication server 5 performs the setting to end processing (step 192). Authentication server 5 also transmits a setting content notification to archive server 6 and relay server 7 to notify that the setting to end processing has been made (step 193).

Upon receipt of the setting content notification related to information processing terminal 8 from authentication server 5, each of archive server 6 and relay server 7 performs the setting to end processing to erase channel setting information related to information processing terminal 8 from the memory. Subsequently, for responding to the setting to end processing, they transmit setting response information to authentication server 5 to indicate that the setting to end processing for information processing terminal has been completed (step 194).

Upon receipt of the setting response information from archive server 6 and relay server 7, authentication server 5 transmits a setting content notification to information processing terminal 8 to indicate that the setting to end processing has been completed (step 195), and performs processing to release an accounting setting for information processing terminal 8 (step 196).

According to this embodiment, since the location at which image data is preserved is set in a server device connected to a network, the capacity of preserved image data can be increased, as compared with images preserved in a recording medium loaded in a video camera, so that user need not be worried about the recording time. Also, when image data is recorded in the server device while it is being captured, a process for copying the image data to a PC after the image data has been captured can be omitted to improve real time image processing.

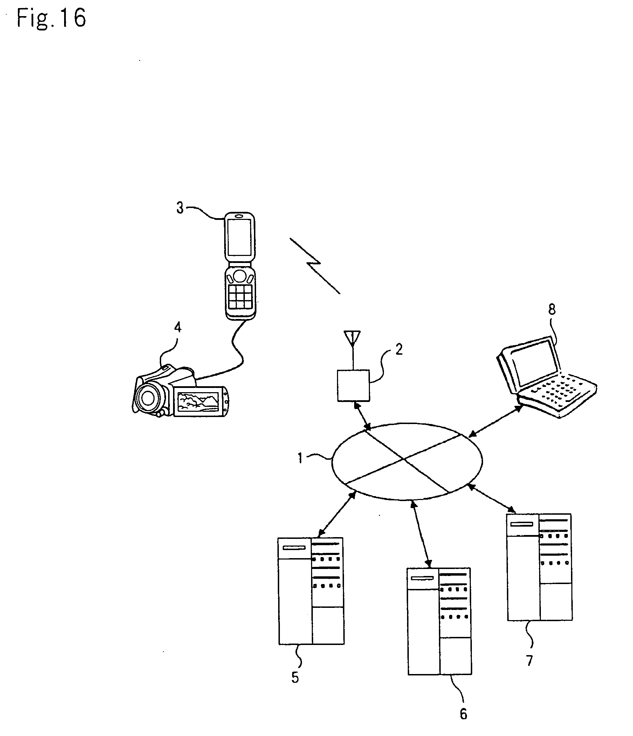

Alternatively, each server may be connected to IP network 1, as shown in Fig. 16. Also, archive server 6 may be provided with functions of relay server 7. Archive server 6 performs data processing to convert the rate. Further, archive server 6 may comprise the functions of authentication server 5.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

## Claims

1. An image processing system comprising an authentication server and an archive server each connected to a mobile terminal through a network, wherein:
said authentication server transmits a first permission notification to said archive server and said mobile terminal to indicate that said mobile terminal is permitted to use an image processing service when said authentication server authenticates that said mobile terminal which requests a connection is a previously registered terminal; and
said archive server, upon receipt of said first permission notification from said authentication server and upon receipt of image data from said mobile terminal, preserves received image data.

2. The image processing system according to claim 1, wherein said authentication server charges said mobile terminal for a service used thereby in correspondence to storage capacity of image data preserved by said archive server.

3. The image processing system according to claim 1 or 2, wherein:
said authentication server, upon receipt of a connection request from an information processing terminal different from said mobile terminal through said network, examines whether or not said information processing terminal is a previously registered terminal, and transmits a second permission notification to said archive server and said information processing terminal to indicate that said information processing terminal is permitted to use said image processing service when said authentication server authenticates that said information processing terminal is a registered terminal, and
said archive server, upon receipt of said second permission notification from said authentication server and upon receipt of setting information including an instruction to transmit said image data to said information processing terminal from said mobile terminal, transmits said image data received from said mobile terminal to said information processing terminal.

4. The information processing system according to claim 3, wherein said archive server, upon receipt of setting information including information on a transmission bit rate of said image data from said information processing terminal after said second permission notification has been received, converts said image data to said transmission bit rate in said setting information and transmits said image data to said information processing terminal at the converted bit rate.

5. A server device connected to a mobile terminal through a network, comprising:
a storage unit including authentication information which describes an identifier of a terminal which is permitted to use an image processing service; and
a control unit for examining whether or not said identifier of said mobile terminal has been registered with reference to said authentication information upon receipt of a connection request from said mobile terminal, transmitting a first permission notification to said mobile terminal to indicate that said mobile terminal is permitted to use said image processing service when said control unit authenticates that said mobile terminal is a previously registered terminal, and upon receipt of image data from said mobile terminal, preserving received image data in said storage unit.

6. The server device according to claim 5, wherein said control unit charges said mobile terminal for a service used thereby in correspondence to storage capacity of image data preserved in said storage unit.

7. The server device according to claim 5 or 6, wherein said control unit, upon receipt of a connection request from an information processing terminal different from said mobile terminal through said network, examines whether or not said information processing terminal is a previously registered terminal with reference to said authentication information, and transmits a second permission notification to said information processing terminal to indicate that said information processing terminal is permitted to use said image processing service when said control unit authenticates that said information processing terminal is a registered terminal, and upon receipt of setting information including an instruction to transmit said image data to said information processing terminal from said mobile terminal, transmits said image data received from said mobile terminal to said information processing terminal.

8. The server device according to claim 7, wherein said control unit, upon receipt of setting information including information on a transmission bit rate of said image data from said information processing terminal after said second permission notification has been transmitted to said information processing terminal, converts said image data to said transmission bit rate in said setting information and transmits said image data to said information processing terminal at the converted bit rate.

9. An image processing method by a server device connected to a mobile terminal through a network, comprising:
storing authentication information which describes an identifier of a terminal which is permitted to use an image processing service;
upon receipt of a connection request from said mobile terminal, examining whether or not said identifier of said mobile terminal has been registered with reference to said authentication information;
transmitting a first permission notification to said mobile terminal to indicate that said mobile terminal is permitted to use said image processing service when authenticating that said mobile terminal is a previously registered terminal; and
upon receipt of image data from said authenticated mobile terminal, preserving received image data.

10. The image processing method according to claim 9, further comprising charging said mobile terminal for a service used thereby in correspondence to storage capacity of preserved image data.

11. The image processing method according to claim 9 or 10, further comprising:
upon receipt of a connection request from an information processing terminal different from said mobile terminal through said network, examining whether or not said information processing terminal is a previously registered terminal with reference to said authentication information;
transmitting a second permission notification to said information processing terminal to indicate that said information processing terminal is permitted to use said image processing service when authenticating that said information processing terminal is a registered terminal; and
upon receipt of setting information including an instruction to transmit said image data to said information processing terminal from said mobile terminal, transmitting said image data received from said mobile terminal to said information processing terminal.

12. The image processing method according to claim 11, further comprising:
upon receipt of setting information including information on a transmission bit rate of said image data from said information processing terminal after said second permission notification has been transmitted to said information processing terminal, converting said image data to said transmission bit rate in said setting information and transmitting said image data to said information processing terminal at the converted bit rate.
